# EUROPEAN PATENT SPECIFICATION

(11) **EP 2 952 247 B1**
(45) Date of publication and mention of the grant of the patent: **30.01.2019**
(21) Application number: 14745945.7
(22) Date of filing: 31.01.2014
(51) Int. Cl.: B01D 71/02, B01D 61/36, B01D 69/04, B01D 69/12

(54) **METHOD FOR USING CERAMIC FILTER, AND FILTER DEVICE**
VERFAHREN ZUR VERWENDUNG EINES KERAMIKFILTERS UND FILTERVORRICHTUNG
PROCÉDÉ D'UTILISATION D'UN FILTRE CÉRAMIQUE ET DISPOSITIF-FILTRE ASSOCIÉ

(30) Priority: 01.02.2013 JP 2013019003
(43) Date of publication of application: 09.12.2015
(73) Proprietor: NGK Insulators, Ltd., Nagoya-shi, Aichi 467-8530 (JP)
(72) Inventor: ICHIKAWA, Akimasa, Nagoya-shi Aichi 467-8530 (JP); FURUKAWA, Masahiro, Nagoya-shi Aichi 467-8530 (JP)
(74) Representative: TBK
(86) International application number: PCT/JP2014/052307
(87) International publication number: WO 2014/119742

(56) References cited:
- WO-A1-2004/091756
- WO-A1-2007/004263
- WO-A1-2010/070992
- WO-A1-2012/035986
- WO-A1-2012/035986
- GB-A- 1 382 464
- JP-A- 2011 206 613
- JP-A- 2011 502 042
- JP-U- S6 275 803
- JP-U- S51 152 046
- US-A1- 2009 008 341

## Description

### Technical Field

The present invention relates to a method for using a ceramic filter, and a filter device including a ceramic filter.

### Background Art

In recent years, a filter made of ceramic has been used to selectively separate and recover an only specific component from a mixture of multiple components. The filter made of ceramic is excellent in mechanical strength, durability, corrosion resistance and the like as compared with a filter made of organic polymer, and hence, the filter is preferably applied as a separation membrane which separates a liquid or gas mixture at a molecule level in a broad field such as a petrochemistry field, a natural gas plant, or a medicine or food field.

In such a filter made of ceramic (referred to as the ceramic filter), for the purpose of improving a permeation performance while acquiring a separation performance, it is necessary to enlarge an effective membrane area (the area of the separation membrane which comes in contact with a fluid to be treated), and for this necessity, a filter shape is desirably of a monolith type (or a honeycomb type). The monolith type of filter has advantages that the filter is hard to bend, is easy to seal, can be made compact and can achieve cost reduction, and the like, as compared with a tube type of filter. In many cases, the monolith type of filter includes a porous supporter having a round pillar-like outer shape and having therein a large number of parallel through channels (also referred to as cells) formed in an axial direction of the filter, and further, a separation membrane having smaller pore diameters than those of the porous supporter is formed on an inner wall surface in which the cells are to be formed.

An example of a prior document in which the conventional monolith type (or honeycomb type) of ceramic filter is disclosed is Patent Document 1. In addition, an example of a prior document in which a fluid separating method using such a filter is disclosed is Patent Document 2.

In addition, there is disclosed a filter (a membrane container) in which a flow speed of the fluid flowing through the filter is increased to improve the separation performance (e.g., see Patent Document 3).

### Citation List

### Patent Documents

[Patent Document 1] WO 2008/056803
[Patent Document 2] Domestic re-publication of PCT international application No. 2010-070992
[Patent Document 3] JP-A-2012-61442

WO 2004/091756 A1 discloses a ceramic filter where a plurality of through channels is present in a pillar-shaped body extending from a first end face to a second end face. Open ends of both the end faces of the through channels are opened, but in part of the through channels, the open ends of both the end faces are plugged by plugging members.

### Summary of the Invention

### Problem to be Solved by the Invention

In such a method of separating a substance having a high volatility as disclosed in Patent Document 2, to further improve a separation performance, there is used means for beforehand heating a mixed fluid to be treated. In general, when a flow rate of a supply fluid is low, a flow speed is lowered, and a filtering time lengthens to cause polarization in through channels (cells), thereby deteriorating the separation performance. It is to be noted that main causes for the polarization are (1) a difference between an inner temperature and an outer temperature of the fluid flowing through the cells (a difference in temperature between a central portion and the vicinity of a separation membrane) due to vaporization heat of a permeable substance which has permeated the separation membrane, and (2) a difference between an inner concentration and an outer concentration (a difference in concentration between the central portion and the vicinity of the separation membrane) in "the concentration of the permeable substance" in the fluid flowing through the cells due to permeation of the permeable substance through the separation membrane. That is, when the flow speed lowers, the temperature and the concentration locally lower in a contact interface, and hence, a filter cannot exert any intrinsic performance. Therefore, for the purpose of preventing the separation performance of the filter from being deteriorated, it is necessary to mix the fluids in the cells, thereby dissolving polarization. However, generally for the purpose of causing turbulence in the cells, it is necessary to acquire a high flow rate, i.e., a high flow speed in accordance with a sectional area of the filter. This necessity requires a pump of a high capability, but the pump of the high capability invites the problem of enlargement of the pump and increase of energy and cost required for an operation of the pump are incurred. Specifically, during the flowing in a round tube, Reynolds number Re (= Duρ/µ) of 4000 or more is required, and particularly in a monolith type of filter having a small inner diameter D, a high flow speed u is required. Here, D is an inner diameter of each cell, u is an average flow speed, ρ is a density of the fluid, and µ is a viscosity of the fluid.

Additionally, in a conventional separating method, the mixed fluid to be treated is allowed to flow only in one direction from an inflow side end face to an outflow side end face of a filter, and is filtered. However, when such a fluid of the high flow rate corresponding to the sectional area of the filter as described above is filtered, temperature drop of the fluid in a filtering process easily occurs. Therefore, it is necessary to beforehand sufficiently apply heat to the fluid to be treated, but there have been incurred the problems such as installation of a large heater and increase of energy or cost required for an operation of the heater.

On the contrary, in a membrane container described in Patent Document 3, a flow path of the fluid is returned in the membrane container with the intension of increasing the flow speed of the fluid to be treated. Further, the separation performance is intended to be improved in this way. However, in the membrane container described in Patent Document 3, a round returning portion for use in returning the fluid is disposed in an end face of a membrane container main body. In consequence, a portion of the membrane container end face in which the returning portion is disposed cannot come in contact with a membrane due to the flowing fluid, which has raised the problem that a treatment amount of the fluid (an effective membrane area) becomes smaller.

An object of the present invention is to provide a method for using a ceramic filter and a filter device in which a high separation performance is realized while maintaining a high treatment amount.

The object is solved by features defined in claims 1 and 10.

### Means for Solving the Problem

The present inventors have divided through channels of a ceramic filter into an outward path and a return path by through channel division means, allowing a mixed fluid to reciprocate through the same filter once or more, and have disposed the through channel division means on plugging portions of water collecting slits. Further, the present inventors have found that the above problem can thus be solved. That is, according to the present invention, the following method for using a ceramic filter and a filter device are provided. It is to be noted that, here, "water collection" means collecting of a liquid and/or vapor which has permeated a membrane, and an object of the collection is not limited to "water" and may be any substance as long as the substance permeates the membrane. Examples of the substance which has permeated the membrane include water, steam, hydrogen, nitrogen, carbon dioxide, alcohol, an organic liquid medium, and an organic molecule.
[1] A method for using a ceramic filter that is used to separate a target permeable substance from a mixed fluid and that includes a pillar-shaped porous body having a plurality of through channels extending through the porous body from a first end face to a second end face and formed in rows and having a circumferential surface, and a separation membrane disposed on each of inner wall surfaces of at least part of the plurality of through channels, wherein one or some of the plurality of through channels are water collecting cells whose open ends in the first end face and the second end face are plugged by plugging members, further wherein water collecting slits is disposed to open in the circumferential surface of the porous body so that the water collecting cells communicate with an external space, and wherein the water collecting cells are arranged to form at least one row in end faces of the porous body, the method for using the ceramic filter including: disposing through channel division means along a row in which the water collecting cells are arranged in at least one of the end faces of the porous body in a state where the through channel division means is in contact with the row, and dividing the plurality of through channels into a plurality of zones including an outward path and a return path by use of the through channel division means so that the mixed fluid undergoes, at least once, a passing process of passing through the outward path in which the mixed fluid flows from the first end face to the second end face of the ceramic filter, returning and then passing through the return path in which the mixed fluid flows from the second end face to the first end face, and collecting the target permeable substance after the target permeable substance permeates the separation membrane.
[2] The method for using the ceramic filter according to [1], including decompressing an inside of a casing in which the ceramic filter is received by using decompressing means.
[3] The method for using the ceramic filter according to [1] or [2], including heating the mixed fluid before the mixed fluid flows into each of the outward path and the return path.
[4] The method for using the ceramic filter according to any one of [1] to [3], including disposing, as the through channel division means, seal means for preventing the mixed fluid from penetrating beyond the through channel division means at least an inflow side end face.
[5] The method for using the ceramic filter according to [4], including disposing, as the through channel division means, the seal means in each of the first end face and the second end face.
[6] The method for using the ceramic filter according to [5], wherein a width of the seal means is from 0.5 to 1.5 times as large as a width of the row in which the water collecting cells are arranged.
[7] The method for using the ceramic filter according to any one of [1] to [6], wherein the number of times of the returning is from 1 to 5.
[8] The method for using the ceramic filter according to any one of [1] to [7], wherein the separation membrane is a membrane by which alcohol is separable from an organic liquid medium containing the alcohol.
[9] The method for using the ceramic filter according to any one of [1] to [8], wherein the separation membrane is a hybrid silica membrane having an organic functional group.
[10] A filter device including: a ceramic filter that includes a pillar-shaped porous body having a plurality of through channels extending through the porous body from a first end face to a second end face and formed in rows and having a circumferential surface, and a separation membrane disposed on each of inner wall surfaces of at least part of the plurality of through channels, wherein one or some of the plurality of through channels are water collecting cells whose open ends in the first end face and the second end face are plugged by plugging members, and further wherein water collecting slits are disposed to open in the circumferential surface of the porous body so that the water collecting cells communicate with an external space; and a casing which receives the ceramic filter and forms an introduction path to introduce a mixed fluid into the ceramic filter, an intermediate path to return and reintroduce, into the ceramic filter, the mixed fluid which is being treated, and a discharge path to discharge the treated fluid from the ceramic filter, wherein the plurality of through channels have at least one set of an outward path in which the mixed fluid flows from the first end face to the second end face and a return path in which the mixed fluid returns and flows from the second end face to the first end face, the water collecting cells are arranged to form at least one row in end faces of the porous body, through channel division means is disposed along the row in which the water collecting cells are arranged in at least one of the end faces of the porous body in a state where the through channel division means is in contact with the row, and the outward path and the return path are divided by the through channel division means.
[11] The filter device according to [10], wherein the casing has decompressing means for controlling an inner pressure of the casing to promote separation of a target permeable substance.
[12] The filter device according to [10] or [11], including a plurality of heating means for heating the mixed fluid before the mixed fluid flows into each of the outward path and the return path.
[13] The filter device according to any one of [10] to [12], wherein the plurality of through channels are divided into a plurality of zones including the outward path and the return path, and the plurality of zones are formed by the through channel division means disposed in the first end face and the second end face.
[14] The filter device according to any one of [10] to [13], wherein the through channel division means is seal means disposed in each of the first end face and the second end face.
[15] The filter device according to [14], wherein a width of the seal means is from 0.5 to 1.5 times as large as a width of the row in which the water collecting cells are arranged.
[16] The filter device according to any one of [10] to [15], wherein the number of times of the returning is from 1 to 5.
[17] The filter device according to any one of [10] to [16], wherein the separation membrane is a membrane by which alcohol is separable from an organic liquid medium containing the alcohol.
[18] The filter device according to any one of [10] to [17], wherein the separation membrane is a hybrid silica membrane having an organic functional group.
[19] The filter device according to any one of [10] to [18], wherein a capacity of the intermediate path is from 5 to 50% of a through channel capacity.
[20] The filter device according to any one of [10] to [19], wherein the discharge path is positioned on a side opposite to the introduction path via the ceramic filter.

### Effect of the Invention

In a method for using a ceramic filter and a filter device of the present invention, through channels of the ceramic filter are divided into a plurality of zones. Consequently, in the present inventions, as compared with a case where a mixed fluid is allowed to pass through an entire ceramic filter only in one direction as in a conventional method for using the ceramic filter, a sectional area of an end face into which the mixed fluid flows becomes smaller, and a flow speed in cells relatively becomes faster, so that a high mixed state (Reynolds number) can be obtained. Therefore, in the present invention, even when a supply amount of the mixed fluid is the same, a higher flow speed can be obtained, and a separation performance is hard to deteriorate, thereby enabling downsizing of a pump which feeds out a fluid to be treated and reduction of an energy amount required for an operation of the pump. Additionally, in the method for using the ceramic filter and the filter device of the present invention, in a state where through channel division means is in contact with "a row in which water collecting cells are arranged" in at least one end face of a porous body, the through channel division means is disposed along the "row". Further, an outward path and a return path are divided by the through channel division means. Therefore, when the outward path and the return path are divided, the outward path and the return path (open ends of the through channels) are not closed by the through channel division means. In consequence, it is possible to prevent decrease of a treatment amount of the fluid (an effective membrane area) due to the disposing of the through channel division means in the end face of the porous body. Additionally, in the method for using the ceramic filter and the filter device of the present invention, in a portion (an intermediate path) in which the fluid is returned, the fluid which has been polarized in the outward path cells is stirred. In consequence, the fluid whose polarization is dissolved in at least the intermediate path can be allowed to flow into the return path, to improve the separation performance. As to an effect of the above stirring, the stirring is effective especially in a case where the supply amount of the mixed fluid is small. Specifically, in a case where the Reynolds number does not reach 4000 even when the through channels are divided into the large number of zones to heighten the flow speed, insides of the cells do not reach turbulence and the polarization cannot sufficiently be dissolved. However, in the present invention, the fluid can forcibly be stirred to dissolve the polarization regardless of the flow speed in the intermediate path.

### Brief Description of the Drawings

Fig. 1A is a schematic view showing one embodiment of a filter device of the present invention;
Fig. 1B is a schematic view of the filter device shown in Fig. 1A and seen from an arrow-A direction;
Fig. 1C is a plan view schematically showing a state that through channel division means is disposed along "a row in which water collecting cells are arranged" in an end face of a ceramic filter in a state where the through channel division means is in contact with the row;
Fig. 2A is a schematic view showing a conventional filter device;
Fig. 2B is a schematic view of a filter device shown in Fig. 2A and seen from an arrow-B direction;
Fig. 3A is a schematic view showing another embodiment of the filter device of the present invention;
Fig. 3B is a schematic view of a filter device shown in Fig. 3A and seen from an arrow-C direction;
Fig. 4A is a schematic view showing still another embodiment of the filter device of the present invention;
Fig. 4B is a schematic view of a filter device shown in Fig. 4A and seen from an arrow-D direction;
Fig. 5A is a schematic view showing a further embodiment of the filter device of the present invention;
Fig. 5B is a schematic view of a filter device shown in Fig. 5A and seen from an arrow-E direction;
Fig.6 is a schematic view showing one embodiment of the conventional filter device;
Fig. 7 is a schematic perspective view showing one embodiment of a monolith type of filter, a part of which is cut out;
Fig. 8 is an enlarged sectional view showing the vicinity of one of filtering cells shown in Fig. 7;
Fig. 9A is a schematic view showing a still further embodiment of the filter device of the present invention; and
Fig. 9B is a schematic view of the filter device shown in Fig. 9A and seen from an arrow-F direction.

### Mode for Carrying out the Invention

Hereinafter, embodiments of the present invention will be described with reference to the drawings. The present invention is not limited to the following embodiments, and change, modification and improvement can be added to the present invention without departing from the gist of the invention.

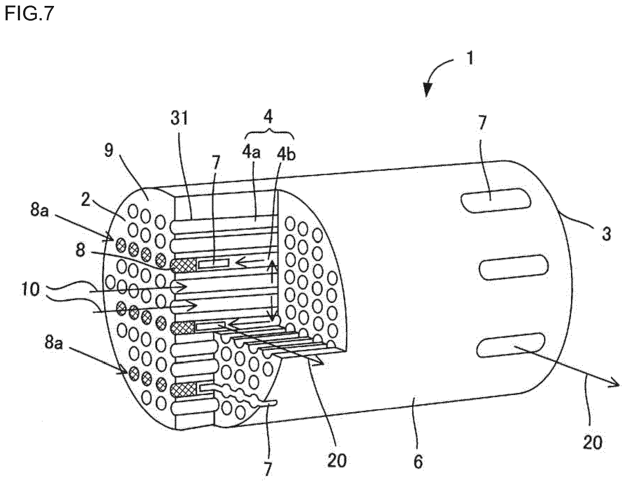

As a ceramic filter for use in a method for using the ceramic filter and a filter device of the present invention, a heretofore known filter is usable, but it is preferable to use such a monolith type of ceramic filter 1 as shown in, e.g., Fig. 7. In this technical field, the monolith type indicates a structure where a plurality of through channels are present in a pillar-shaped body as in a lotus root.

The monolith type of ceramic filter 1 shown in Fig. 7 includes a porous body 9 having a first end face 2, a second end face 3, and a circumferential surface 6. The porous body 9 has a round pillar-like outer shape and has therein a large number of through channels 4 extending through the porous body from the first end face 2 to the second end face 3 and formed in rows parallel to one another. Open ends of both the end faces of the through channels 4 are opened, but in part of the through channels, the open ends of both the end faces are plugged by plugging members 8. In the through channel 4 in which the open ends of both the end faces are opened, a separation membrane 31 is disposed on an inner wall surface of the through channel, and the through channel functions as a filtering cell 4a. Additionally, in the through channel 4 in which the open ends of both the end faces are plugged by plugging members 8, the separation membrane 31 does not have to be disposed on the inner wall surface, and the through channel functions as a water collecting cell 4b. The plugging members 8 can be made of the same material as in the porous body 9. Additionally, in the end face of the ceramic filter 1, the plugging members 8 are arranged to form at least one row (a row 8a in which the water collecting cells (the plugging members) are arranged).

In the circumferential surface 6, water collecting slits 7 are disposed so that the water collecting cells 4b communicate with an external space. Thus, the water collecting slits 7 are disposed, and hence, it is possible to prevent increase of a pressure loss and decrease of a permeation amount due to the increase when a mixed fluid 10 passes through the porous body 9. In this case, a length of the plugging member 8 may be such a length as to reach the water collecting slit 7. That is, there is a mechanism for the mixed fluid 10 to be separated that the mixed fluid 10 enters the filtering cell 4a, and afterward, a permeable substance of a part of the mixed fluid selectively permeates the separation membrane 31, and is discharged to the outside of the ceramic filter 1 through the water collecting slit 7 or the porous body 9. In addition, although not shown in the drawing, the first end face 2 or the second end face 3 is preferably sealed by, e.g., a glass seal or a metal seal. In consequence, when the mixed fluid 10 flows into the filtering cell 4a, it is possible to prevent the mixed fluid 10 from being mixed with passed fluid which penetrates from the first end face 2 or the second end face 3 into the porous body 9, and passes through the separation membrane 31 there. The end face through which the mixed fluid 10 penetrates into the porous body 9 is an inflow side end face.

In the ceramic filter 1 shown in Fig. 7, a sectional shape of the through channel 4 is round, but in the method for using the ceramic filter and the filter device according to the present invention, the sectional shape of the through channel 4 may be any polygonal shape.

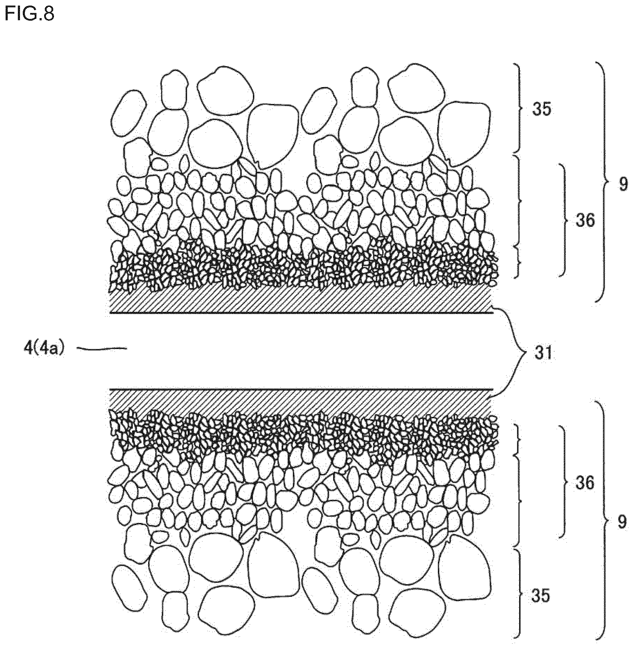

Fig. 8 is an enlarged sectional view showing the enlarged vicinity of the filtering cell 4a shown in Fig. 7. As shown in Fig. 8, the porous body 9 is constituted of a supporter 35, and an intermediate layer 36 superimposed on the supporter 35 and including one or more layers having different average pore diameters. Further, in the filtering cell 4a, the separation membrane 31 is disposed on the surface of the intermediate layer 36. The number of the layers forming the intermediate layer 36 and the average pore diameter in each layer can suitably be selected in accordance with properties or use of the fluid to be treated, in view of a separation performance.

There is not any special restriction on the separation membrane 31 as long as it is possible to separate the mixed fluid including a mixed gas, a mixed liquid or the like, and the membrane may suitably be selected from a known carbon membrane, a zeolite membrane, a silica membrane, and the like in accordance with a type of fluid to be separated. It is to be noted that, when alcohol is separated from an organic liquid medium containing the alcohol, a hybrid silica membrane having an organic functional group is preferable among these membranes. As the organic functional group, the number of carbon atoms is preferably from 2 to 8, and the group can suitably be selected in accordance with a type of alcohol to be separated. Furthermore, the organic functional group may be a chain alkyl group or an annular aryl group. When the alcohol to be separated is ethanol, an octyl group, a phenyl group or a tolyl group is especially preferable from the viewpoint that a selection ratio is high.

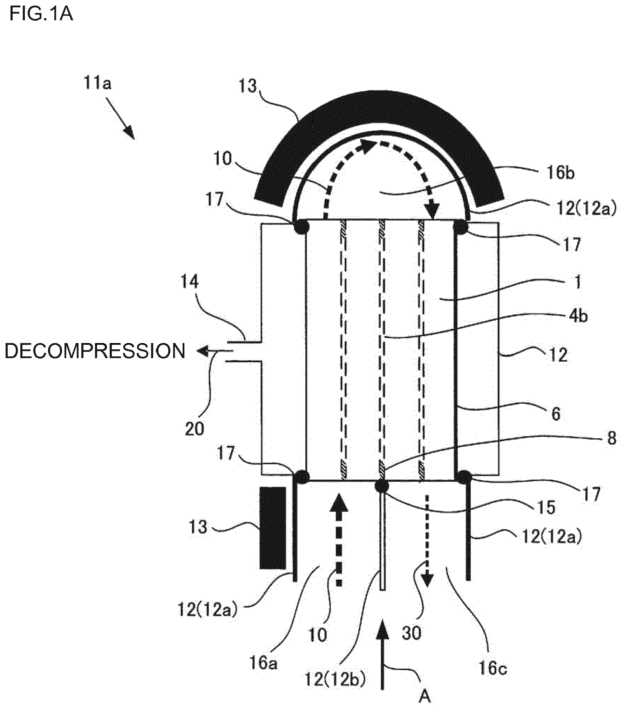

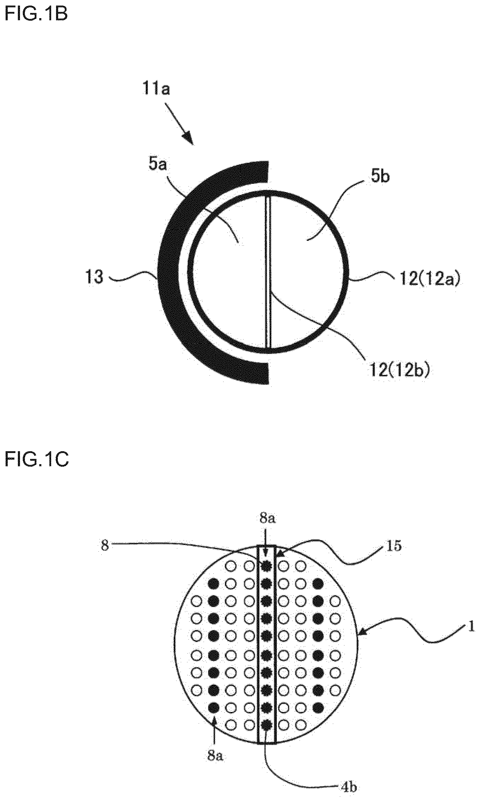

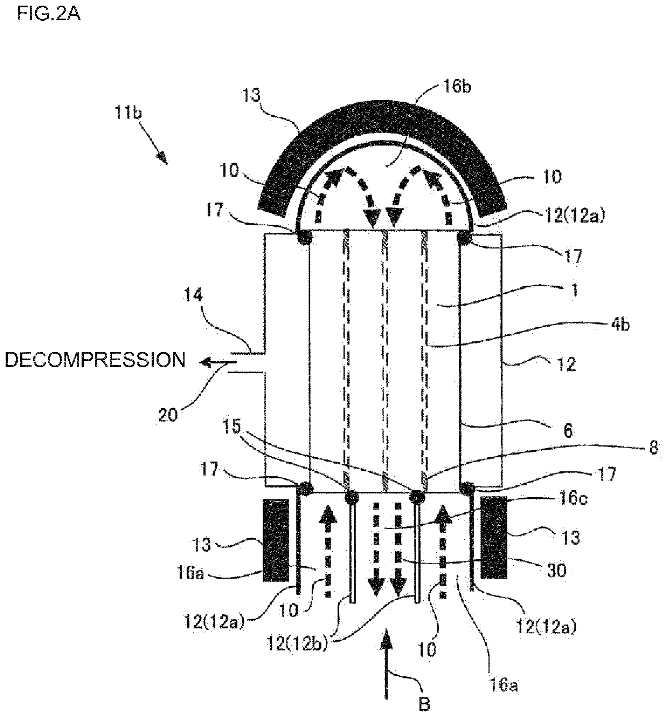

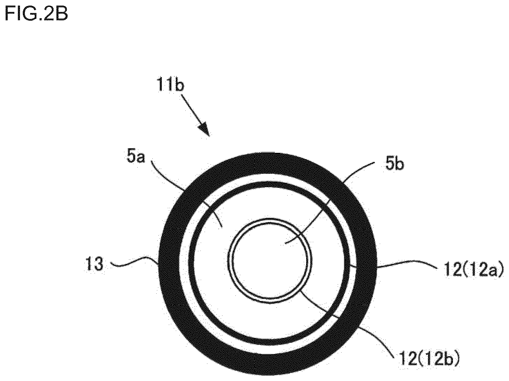

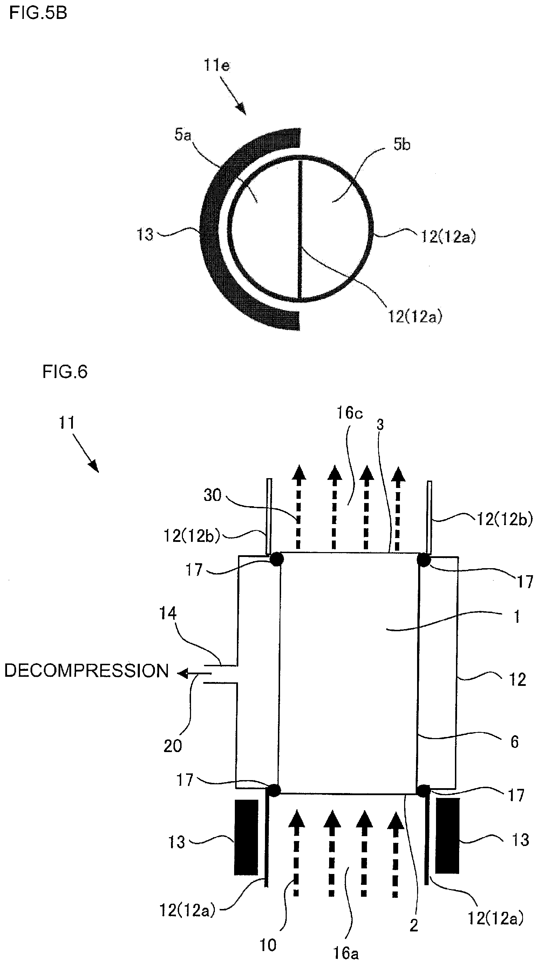

Next, the method for using the ceramic filter and the filter device of the present invention will be described. As described above, the present invention provides a method and a device for use in separating a target permeable substance from the mixed fluid by use of the ceramic filter including the porous body and the separation membrane disposed on each of the inner wall surfaces of at least part of the plurality of through channels. The porous body is a pillar-shaped structure body in which there are disposed the plurality of through channels extending through the body from the first end face to the second end face and formed in the rows. The method for using the ceramic filter of the present invention is preferably a method using the filter device of the present invention. Fig. 1A to Fig. 1C, Fig. 3A to Fig. 5B, Fig. 9A and FIG. 9B are schematic views showing the respective embodiments of the filter device of the present invention, and Fig. 2A, Fig. 2B and Fig. 6 are schematic views showing one embodiment of a conventional filter device. In Fig. 1A and the like, the water collecting cells 4b and the plugging members 8 formed in the ceramic filter 1 are schematically shown. Additionally, Fig. 1C shows, for convenience, an arrangement of the rows 8a in which the water collecting cells (the plugging members) are arranged and which is hidden by through channel division means 15.

For example, when the monolith type of ceramic filter 1 shown in Fig. 7 is used in the present invention, the ceramic filter 1 is preferably received in a casing 12 and utilized as each of filter devices 11a to 11f as shown in Fig. 1A, Fig. 1B and the like. The casing 12 receives the ceramic filter 1, and forms an introduction path 16a to introduce the mixed fluid 10 into the ceramic filter 1, an intermediate path 16b to return and reintroduce, into the ceramic filter 1, the mixed fluid 10 which is being treated, and a discharge path 16c to discharge a treated fluid 30 from the ceramic filter 1. In addition, the casing 12 also functions as a disposing place of after-mentioned heating means 13 and a connecting place (a decompression port 14) of decompressing means.

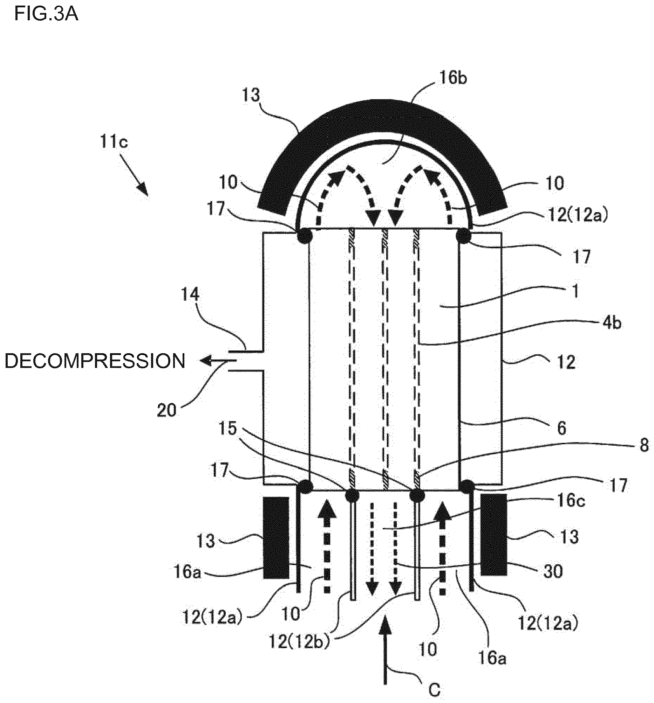

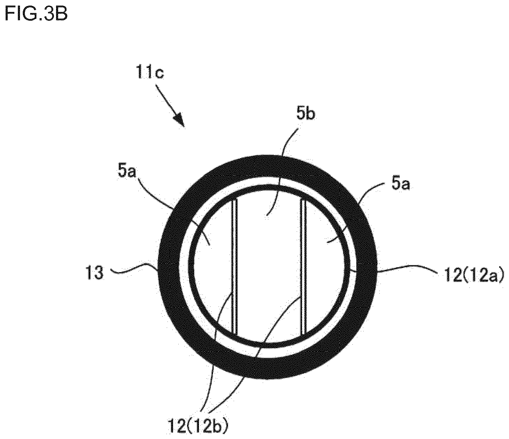

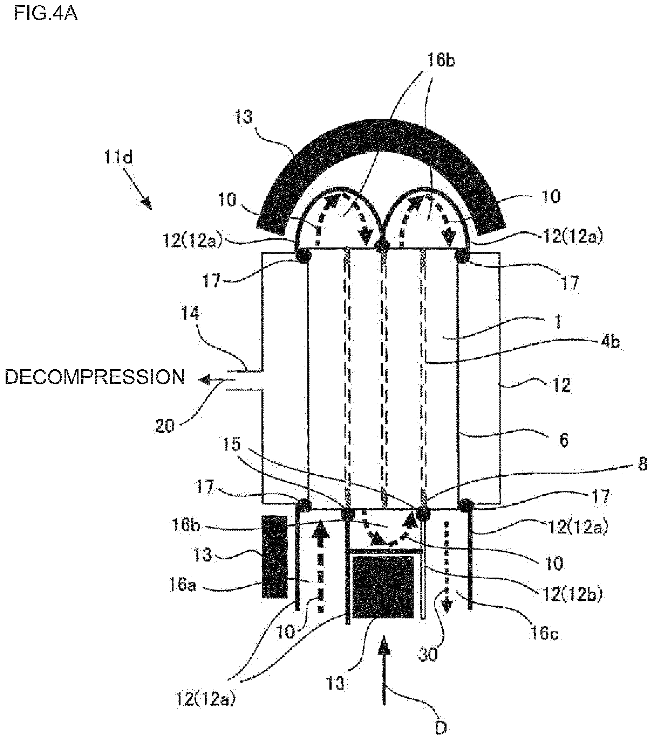

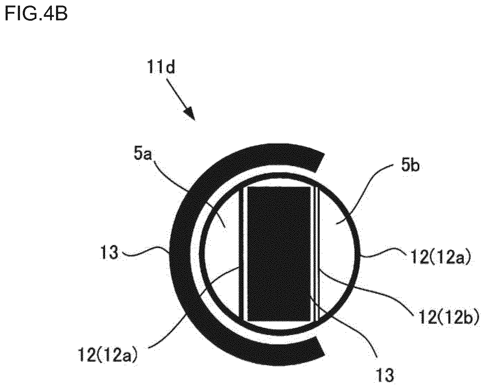

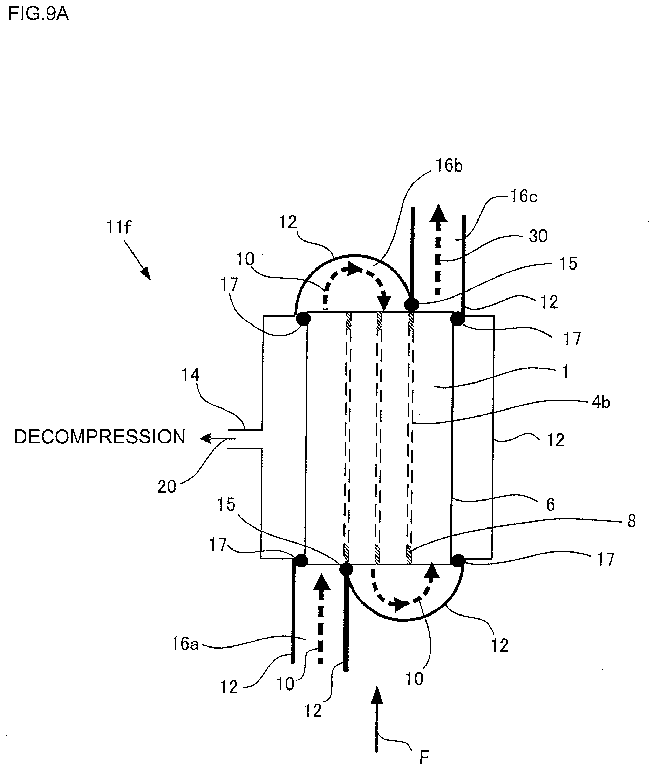

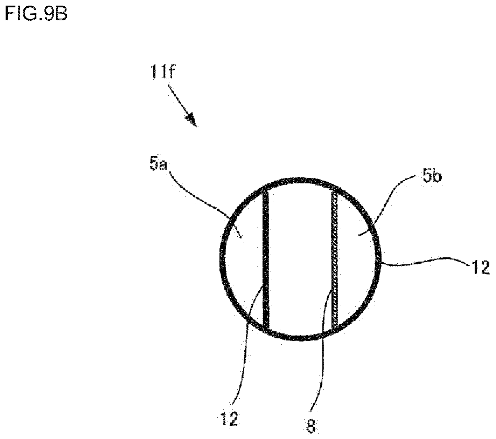

As shown in Fig. 6, in a conventional fluid separating method, the mixed fluid 10 to be treated is allowed to flow only in one direction from the first end face 2 as an inflow side end face to the second end face 3 as an outflow side end face of the ceramic filter 1, and is filtered. On the other hand, in the filter device of the present invention, as shown in Fig. 1A, Fig. 1B and the like, the mixed fluid 10 undergoes, at least once, a passing process of passing through an outward path 5a in which the mixed fluid flows from the first end face 2 to the second end face 3 of the ceramic filter 1, returning, and passing through a return path 5b in which the mixed fluid flows from the second end face 3 to the first end face 2. That is, such a passing process may be performed in one reciprocation as shown in, e.g., Fig. 1A, Fig. 3A, and Fig. 5A, two reciprocations as shown in Fig. 4A, or more. It is to be noted that, in the filter device 11c shown in Fig. 3A, the mixed fluid 10 flows in from each of two introduction paths 16a and returns, and hence, the number of returning times is one, but the fluids from two directions join each other to be stirred, so that a stirring effect enhances. In addition, the filter device of the present invention may only have at least one set of the outward path 5a and the return path 5b constituting a pair with the outward path 5a. For example, as shown in Fig. 9A and Fig. 9B, the introduction path 16a and the discharge path 16c may be formed in the different end faces of the ceramic filter 1, respectively, to have the passing process of one reciprocation and half or two reciprocations and half. It is to be noted that, in the filter device having the passing process of 1.5 or more reciprocations, the passing process may be discontinued halfway to dispose a plurality of mutually independent passing routes, and the routes may be used to filter different fluids, respectively. That is, a single filter device may be constituted to simultaneously serve as a plurality of filtering systems. The number of the returning times (the number of the intermediate paths) is preferably from 1 to 5, and further preferably from 2 to 4. When the number is smaller than 1, the separation performance deteriorates sometimes. When the number is larger than 5, this structure becomes complicated, and is hard to be manufactured sometimes.

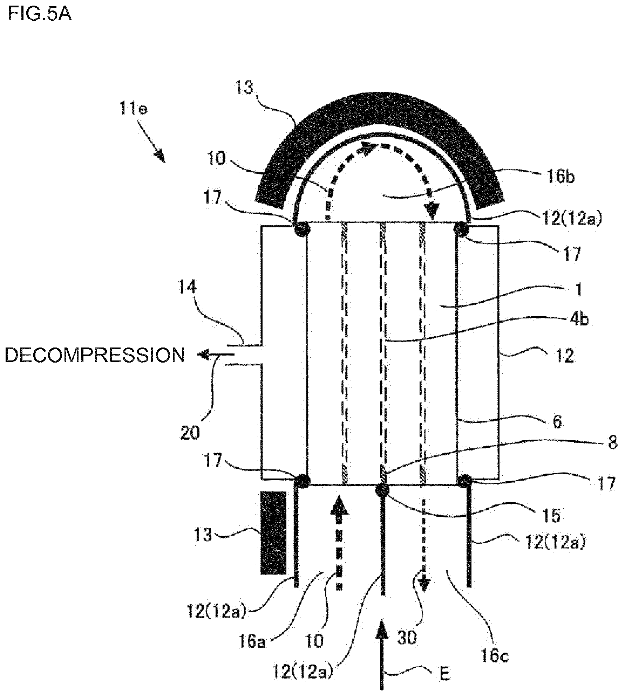

To realize such a passing process, the plurality of through channels 4 are divided into a plurality of zones including the outward path 5a and the return path 5b by the through channel division means 15. The plurality of zones can be formed by the through channel division means 15 suitably disposed in the first end face 2 and/or the second end face 3. When the through channels are divided by the through channel division means 15, as shown in Fig. 1A and the like, the casing 12 is preferably disposed on the through channel division means 15, and a flow-through route (the introduction path, the intermediate path and the discharge path) of each of the fluid flowing into the ceramic filter 1 and the fluid flowing out from the ceramic filter 1 is preferably formed by the casing 12. It is to be noted that each of the introduction path, the intermediate path and the discharge path is preferably formed by a portion of the casing 12 which is disposed on the through channel division means 15, a portion of the casing which is not disposed on the through channel division means 15, or both the portions. When the casing 12 is disposed on the through channel division means 15, it is preferable that the casing 12 comes in contact with the through channel division means 15 and is disposed along the through channel division means 15. In consequence, the fluid flows to the ceramic filter 1 through the flow-through route (the introduction path 16a) formed by a part of the casing including at least the portion of the casing which is disposed on the through channel division means 15, and the fluid flows into the zones divided by the through channel division means 15. Further, afterward, the fluid is discharged through each zone and the intermediate path and finally through the discharge path. The number of the zones to be divided may be two as shown in, e.g., Fig. 1A and Fig. 5A, may be three as shown in Fig. 3A, Fig. 4A and Fig. 9A, or may be more. There is not any special restriction on the through channel division means 15 as long as the through channel division means 15 is seal means for cutting off the penetration of the fluid from divided positions of the first end face 2 and the second end face 3, but it is possible to use a packing or a seal jig made of a material such as a hard rubber or a fluororesin. A width of the seal means (the through channel division means) is preferably from 0.5 to 1.5 times, further preferably from 0.75 to 1.2 times, and especially preferably from 0.8 to 1.0 time as large as a width of the row in which the water collecting cells are arranged. Here, the width of the row in which the water collecting cells are arranged is the shortest distance between circumferences of the filtering cells disposed on both sides adjacent to the water collecting cells. Thus, a relation between the width of the seal means and the width of the row in which the water collecting cells are arranged is in such a range, and hence, it is possible to prevent "the open ends of the cells adjacent to the water collecting slits" from being closed by the packing (the through channel division means). When the rate is smaller than 0.5 time, it is hard to carry out the sealing sometimes. When the rate is larger than 1.5 times, the open ends of the opened through channels are closed sometimes. Here, the width of the seal means is a length in "a direction perpendicular to a longitudinal direction of the seal means and parallel to the end face when the seal means is disposed in the end face of the porous body".

In addition, as shown in Fig. 1C, the through channel division means 15 is disposed "along the row" in the state where the through channel division means 15 is in contact with "the row 8a in which the water collecting cells are arranged" in at least one end face of the porous body. That is, the through channel division means 15 is formed along portions of the end face of the ceramic filter 1 "which are sealed by the plugging members", i.e., portions of the through channels which are not opened. Therefore, when the outward path and the return path are divided, the outward path and the return path are not closed by the through channel division means. In consequence, it is possible to prevent decrease of a treatment amount of the fluid (an effective membrane area) due to the disposing of the through channel division means in the end face of the porous body. In addition, the through channel division means 15 preferably has a linearly extending shape so that the through channel division means can be disposed on "the row in which the water collecting cells are arranged".

In addition, the conventional filter device 11b shown in Fig. 2A and Fig. 2B is formed so that flow of a fluid returns in the filter device, but through channel division means for forming a structure to return the flow of the fluid is round (see Fig. 2B). Therefore, open ends of cells opened in an end face are closed by the through channel division means, and the fluid to be treated cannot flow into the closed cells, so that an effective membrane area decreases. On the other hand, if the through channel division means is formed at such a width that the cells are not closed, seal properties are deteriorated by opened filtering cells facing the seal means, the fluid disadvantageously penetrates beyond the through channel division means, and a desirable flow speed cannot be obtained. In addition, if through channels are not formed in a portion in which the through channel division means is disposed so that open ends of the through channels are not closed, the number of the through channels to be formed decreases, and hence, the effective membrane area decreases. It is to be noted that the conventional filter device 11b shown in Fig. 2A has a constitution similar to the filter device 11a shown in Fig. 1A, except that through channel division means 15 is round and heating means 13 is disposed to surround a casing 12.

In addition, the casing 12 disposed in each of the filter devices 11a to 1 If of the present invention forms the introduction path 16a, the intermediate path 16b and the discharge path 16c to correspond to the through channel division means 15. The introduction path 16a is a portion to introduce the mixed fluid 10 into the outward path 5a. The intermediate path 16b is a portion to return the mixed fluid 10 which is being treated and reintroduce the fluid into the ceramic filter 1. The discharge path 16c is a portion to discharge the treated fluid 30 from the ceramic filter 1. The discharge path 16c is preferably positioned on a side opposite to the introduction path 16a via the ceramic filter 1. In consequence, it is possible to prevent that "when the heating means is used, heat of the fluid flowing through the introduction path 16a is taken by the treated fluid whose temperature has lowered". In addition, when the device is connected to a piping line, a space to be occupied is easily made smaller.

In general, when a flow rate of a supply fluid is low, a flow speed is lowered, and a filtering time lengthens to cause polarization in the through channels (the cells), thereby deteriorating the separation performance. It is to be noted that main causes for the polarization are, in a contact interface between the fluid to be treated and the separation membrane (i.e., an inner peripheral portion of each cell), (1) a difference between an inner temperature and an outer temperature of the fluid flowing through the cells due to vaporization heat of the permeable substance which has permeated the separation membrane and (2) a difference between an inner concentration and an outer concentration in "the concentration of the permeable substance" in the fluid flowing through the cells due to the permeation of the permeable substance through the separation membrane. That is, when the flow speed lowers, the temperature and the concentration locally lower in the contact interface, and hence, the filter cannot exert any intrinsic performance. Therefore, for the purpose of preventing the separation performance of the filter from being deteriorated, it is necessary to acquire a high flow rate, i.e., a high flow speed in accordance with a sectional area of the filter, thereby mixing the fluids in the cells to dissolve the polarization. Further, it is preferable that the high flow speed is acquired to cause turbulence and that the supply fluids are sufficiently mixed to dissolve the polarization. In the filter device of the present invention, as compared with the conventional filter device, a sectional area of a portion through which the fluid passes during the filtering is smaller, and hence, even when the flow rate of the supply fluid is small, the high flow speed can be acquired. In consequence, it is possible to realize downsizing of a pump and reduction of running cost. Additionally, in the method for using the ceramic filter and the filter device of the present invention, the fluid is stirred in the portion (the intermediate path) in which the fluid is returned. In consequence, the fluid which has dissolved the polarization in at least the intermediate path can be allowed to flow into the return path, and the separation performance improves. In the intermediate path, the fluids flowing out from the through channels are returned to flow into the return path, but before that, in the intermediate path, the fluids flowing out from the respective cells join one another and a flow direction varies, and hence, the fluids are forcibly stirred (joined and stirred) regardless of the flow speed given to the fluid, so that the polarization can be dissolved. Therefore, especially on conditions that a supply amount of the fluid is small, e.g., even on conditions that the fluid cannot flow out from a laminar flow region (Reynolds number of 2100 or less) even when the flow speed is heightened by dividing the abovementioned through channels, the polarized fluid to be treated can be returned to the uniform fluid in at least the intermediate path.

A capacity of the intermediate path 16b is preferably from 5 to 50% and further preferably from 8 to 30% of a total capacity (a through channel capacity) of the filtering cells 4a facing the intermediate path 16b. When the percentage is smaller than 5%, the pressure loss heightens sometimes. When the percentage is larger than 50%, heat is hard to be conducted sometimes in a case where the heating means is used. The through channel capacity is the total of the capacities of the respective through channels. When the plurality of intermediate paths are formed in the flow-through route, the capacity of the individual intermediate path 16b (i.e., the capacity of the one intermediate path 16b) preferably satisfies the abovementioned numeric range.

A conventional filter device 11 shown in Fig. 6 has a mechanism in which the mixed fluid 10 is beforehand heated, before the mixed fluid 10 flows from the first end face 2 of the filter 1 into the ceramic filter 1. Further, the heating means 13 is disposed in a portion of the casing 12 before the first end face 2. On the other hand, in the filter device of the present invention, as shown in, e.g., Fig. 1A, Fig. 1B and Fig. 3A to Fig. 5B, the mixed fluid 10 is preferably beforehand heated before the mixed fluid 10 flows into each of the outward path 5a and the return path 5b. That is, each of the filter devices 11a to 11e of the present invention preferably includes the plurality of heating means 13 for heating the mixed fluid 10 before the mixed fluid flows into each of the outward path 5a and the return path 5b.

There is not any special restriction on the heating means 13 as long as the heating means 13 is capable of applying desirable heat to the mixed fluid 10, but it is preferable to use an electric heater, a heat exchanger or the like. There is not any special restriction on a heating timing in a range where the mixed fluid 10 having a required temperature is introduced into the ceramic filter 1, but the mixed fluid 10 is preferably heated immediately before introduced, so that the heat, which is applied to the mixed fluid 10 and escapes until the mixed fluid 10 is introduced into the ceramic filter 1, does not incur deterioration of an energy efficiency. In addition, the heating means 13 is preferably disposed in a place as close as possible to the mixed fluid 10 to be heated and the ceramic filter 1 into which the mixed fluid 10 is to be introduced. That is, the heating means 13 is preferably disposed as close as possible to the end face of the ceramic filter 1, in at least a part of a portion of the casing 12 which forms each of the introduction path 16a and the intermediate path 16b. When the heat exchanger or the like is used, the heating means be disposed away from the ceramic filter 1. In this case, fluid conveying means connecting the heat exchanger to the introduction path 16a and the intermediate path 16b is preferably made of a high heat insulating material.

To efficiently conduct heat to the mixed fluid 10, at least a portion of the casing 12 which is interposed between the heating means 13 and the mixed fluid 10 is preferably made of a high heat conductive material 12a. Examples of the high heat conductive material 12a include carbon, aluminum, iron, and stainless steel. Among these materials, aluminum is especially preferably used from the viewpoints of easiness of shape machining, a high heat conductivity, a high corrosion resistance, and light weight properties. On the other hand, at least a portion of the casing 12 in which the mixed fluid 10 and the treated fluid 30 pass by each other, i.e., a portion of the casing which divides the introduction path 16a and the discharge path 16c is preferably made of a low heat conductive material 12b for the purpose of preventing the heat applied to the mixed fluid 10 from being taken to a treated fluid 30 side. Examples of the low heat conductive material 12b include a silicone rubber, a fluororesin, glass, and a double wall material via air or vacuum. Among these materials, a vacuum double wall material is especially preferably used from the viewpoints of the easiness of the shape machining, a low heat conductivity, and the high corrosion resistance. In addition, from the viewpoint that the number of components is to be decreased, the material may be the same material as in the seal means for use in the through channel division means 15 and, for example, a silicone rubber or a fluororesin is preferable. It is to be noted that, in Fig. 1A to Fig. 6, the low heat conductive material 12b is shown by double lines for convenience, but in the actual filter devices 11a to 11e of the present invention, the low heat conductive material 12b is not limited to a double structure as described above.

Consequently, in the present invention, when the mixed fluid 10 flowing into the ceramic filter 1 is always heated, the separation performance is preferably maintained to be high. In the conventional filter device, a large amount of the fluid has to be collectively heated and introduced, and hence, enlargement and cost increase of not only the pump but also a heater as the heating means cannot be avoided. When the present invention has the heating means, the present invention overcomes these problems of the conventional filtering system while using the heretofore known ceramic filter.

Additionally, in the present invention, as shown in Fig. 1A, Fig. 3A, Fig. 4A, Fig. 5A and Fig. 9A, the inside of the casing 12 in which the ceramic filter 1 is received may be decompressed through the decompression port 14 by use of the decompressing means. Thus, the inside of the casing 12 is decompressed, and hence, a pressure difference is made between a filtering cell 4a side of the ceramic filter 1 and a water collecting cell 4b side or a circumferential wall side, and separation of a permeable substance 20 for the purpose of allowing permeation through the separation membrane is promoted, so that recovery is preferably facilitated. That is, each of the filter devices 11a to 11e of the present invention may include the decompressing means for controlling a pressure in the casing 12 to promote the separation of the target permeable substance 20. The decompressing means is preferably disposed in a part (the decompression port 14) of a portion of the casing 12 which covers the ceramic filter 1. In addition, as the decompressing means, heretofore known means such as a vacuum pump is usable.

Furthermore, although not shown in the drawing, there has heretofore been a technique of arranging the plurality of ceramic filters in series and allowing the mixed fluid to continuously pass through the filters, thereby performing filtering, for the purpose of improving the separation performance of the mixed fluid. To carry out such a technique, the filter device itself becomes large-scaled, and restrictions are imposed on a disposing place and the like from the viewpoint of a size and a weight. Furthermore, the plurality of ceramic filters as well as the casings, heating means and decompressing means matched with the ceramic filters are required to raise the problem that the number of the components increases and cost heightens. Additionally, in each ceramic filter, as seal positions 17 of the through channels through which the mixed fluid passes, to an internal space of the casing which is to be decompressed, increases, there heightens the risk that leakage from a system of the mixed fluid occurs to generate a loss of the mixed fluid, decompressing means such as the vacuum pump is adversely affected, or the leaked mixed fluid catches fire. Therefore, the present invention has remarkable merits even as compared with the conventional filter device in which the abovementioned plurality of ceramic filters are used.

### Examples

Hereinafter, the present invention will be described in more detail on the basis of examples, but the present invention is not limited to these examples.

### (Example 1)

First, alumina was used as aggregate particles, and a monolith type of ceramic filter was prepared. The obtained ceramic filter had a round pillar shape with an outer diameter of 90 mm and a length of 100 mm. In each end face of the ceramic filter, 500 cells of through channels were disposed, and a diameter of each cell was 2.5 mm. Additionally, in the ceramic filter, open ends (water collecting slits) were formed in three rows of water collecting cells and a circumference. Further, the end face of the ceramic filter was sealed with a glass seal. The obtained filter was incorporated into such a casing as shown in Fig. 1A, to prepare a filter device. As a casing material, aluminum was used, and a low heat conductive material was formed into a thermos structure the inside of which was made a vacuum with double walls. Through channel division means 15 (a packing (seal means) made of a hard rubber), which was in contact with "a row 8a in which water collecting cells (plugging members) were arranged" in one end face of the porous body, was disposed "along the row" (see Fig. 1C).

The prepared filter device was used to carry out a penetration vaporization separation test of a mixed liquid (a mixed fluid) having a mass ratio of 1:1:1 of ethanol, normal octane and orthoxylene. As test conditions, a heater temperature was set to 70°C, a secondary side vacuum pressure was set to 50 Torr, a liquid flow rate was set to 3.7 L/minute, and an amount of the fluid which permeated a membrane after elapse of a certain time was calculated as Flux (kg/m²·h). In addition, an IPA concentration in the permeated mixed liquid was measured, and a separation coefficient α (1/(1-ethanol permeation concentration)) was calculated. Table 1 shows the result.

**[Table 1]**

| | No. of returning times | Flow speed (m/s) | Reynolds number | Flux | Separation coefficient |
|---|---|---|---|---|---|
| Example 1 | 1 | 0.050 | 250 | 4.3 | 2.8 |
| Example 2 | 1 | 0.050 | 250 | 4.5 | 3.2 |
| Example 3 | 3 | 0.100 | 500 | 5.9 | 8.3 |
| Example 4 | 1 | 0.050 | 250 | 4.1 | 2.9 |
| Example 5 | 2 | 0.075 | 375 | 4.3 | 4.0 |
| Comparative Ex. 1 | 0 | 0.025 | 125 | 2.4 | 2.1 |
| Comparative Ex. 2 | 1 | 0.050 | 250 | 3.2 | 2.4 |

### (Example 2)

A filter device was prepared on conditions similar to those of Example 1, except that a casing structure was formed as shown in Fig. 3A, and a penetration vaporization separation test of a mixed liquid was carried out. Table 1 shows the result.

### (Example 3)

A filter device was prepared on conditions similar to those of Example 1, except that a casing structure was formed as shown in Fig. 4A, and a penetration vaporization separation test of a mixed liquid was carried out. Table 1 shows the result.

### (Example 4)

A filter device was prepared on conditions similar to those of Example 1, except that a casing structure was formed as shown in Fig. 5A, and a penetration vaporization separation test of a mixed liquid was carried out. Table 1 shows the result.

### (Example 5)

A filter device was prepared on conditions similar to those of Example 1, except that a casing structure was formed as shown in Fig. 9A, and a penetration vaporization separation test of a mixed liquid was carried out. Table 1 shows the result.

### (Comparative Example 1)

A filter device was prepared on conditions similar to those of Example 1, except that a casing structure was formed as shown in Fig. 6, and a penetration vaporization separation test of a mixed liquid was carried out. Table 1 shows the result.

### (Comparative Example 2)

A filter device was prepared on conditions similar to those of Example 1, except that a casing structure was formed as shown in Fig. 2A. Open ends of part of through channels in one end face of a porous body were closed by through channel division means. A penetration vaporization separation test of a mixed liquid was carried out by using the obtained filter device. Table 1 shows the result.

It has been seen from the result shown in Table 1 that, in the filter devices of Examples 1 to 5, as compared with the filter devices of Comparative Examples 1 and 2, both of a permeation speed (Flux) and a separation coefficient indicate high numeric values. In particular, it has been confirmed from the result of Example 3 that as the number of times to reciprocate the mixed fluid in the same ceramic filter becomes larger, the high separation coefficient is indicated. Additionally, as shown in Table 1, even in Example 3 where the number of returning times was increased to heighten a flow speed (m/s) of the liquid flowing through the through channels, Reynolds number did not reach a turbulence region (4000 or more). In Comparative Example 1, to cause turbulence, an enormously large liquid flow rate of 120 L/minute is required. Thus, in the case of a monolith type of filter, diameters of cells are small, and hence, it is necessary to noticeably enlarge a supply amount of a fluid to be treated, for the purpose of causing the turbulence, but in a method for using the ceramic filter and the filter device of the present invention, "joining stirring" can be performed in an intermediate path 16b, so that polarization can be dissolved without enlarging the supply amount of the fluid, and it is possible to downsize a pump and reduce an energy amount required for an operation.

### Industrial Applicability

A method for using a ceramic filter and a filter device according to the present invention are suitably utilized as means for separating a component as a part of a mixture by a penetration vaporization process.

### Description of Reference Numerals

1: ceramic filter, 2: first end face, 3: second end face, 4: through channel, 4a: filtering cell, 4b: water collecting cell, 5a: outward path, 5b: return path, 6: circumferential surface, 7: water collecting slit, 8: plugging member, 8a: row in which the water collecting cells are arranged, 9: porous body. 10: mixed fluid, 11, 11a, 11b, 11c, 11d, 11e and 11f: filter device, 12: casing, 12a: high heat conductive material, 12b: low heat conductive material, 13: heating means, 14: decompression port, 15: through channel division means, 16a: introduction path, 16b: intermediate path, 16c: discharge path, 17: seal position, 20: permeable substance, 30: treated fluid, 31: separation membrane, 35: supporter, and 36: intermediate layer.

## Claims

1. A method for using a ceramic filter (1) that is used to separate a target permeable substance from a mixed fluid and that includes a pillar-shaped porous body (9) having a circumferential surface (6), and having a plurality of through channels (4) extending through the porous body from a first end face (2) to a second end face (3) and formed in rows , and a separation membrane (31) disposed on each of inner wall surfaces of at least part of the plurality of through channels (4), wherein some of the plurality of through channels are water collecting cells (4b) whose open ends in the first end face and the second end face are plugged by plugging members (8), further wherein water collecting slits (7) is disposed to open in the circumferential surface (6) of the porous body (9) so that the water collecting cells (4b) communicate with an external space, and wherein the water collecting cells (4b) are arranged to form at least one row in end faces of the porous body, the method for using the ceramic filter comprising:
disposing through channel division means (15) along a row (8a) in which the water collecting cells (4b) are arranged in at least one of the end faces of the porous body in a state where the through channel division means (15) is in contact with the row, and dividing the plurality of through channels into a plurality of zones including an outward path (5a) and a return path (5b) by use of the through channel division means (15) so that the mixed fluid undergoes, at least once, a passing process of passing through the outward path (5a) in which the mixed fluid flows from the first end face (2) to the second end face (3) of the ceramic filter, returning and then passing through the return path (5b) in which the mixed fluid flows from the second end face (3) to the first end face (2), and
collecting the target permeable substance after the target permeable substance permeates the separation membrane (31).

2. The method for using the ceramic filter according to claim 1, comprising decompressing an inside of a casing in which the ceramic filter is received by using depressing means.

3. The method for using the ceramic filter according to claim 1 or 2, comprising heating the mixed fluid before the mixed fluid flows into each of the outward path (5a) and the return path (5b).

4. The method for using the ceramic filter according to any one of claims 1 to 3, comprising disposing, as the through channel division means (15), seal means (17) for preventing the mixed fluid from penetrating beyond the through channel division means at least an inflow side end face (2).

5. The method for using the ceramic filter according to claim 4, comprising disposing, as the through channel division means, the seal means in each of the first end face and the second end face (3).

6. The method for using the ceramic filter according to claim 5, wherein a width of the seal means (17) is from 0.5 to 1.5 times as large as a width of the row in which the water collecting cells are arranged.

7. The method for using the ceramic filter according to any one of claims 1 to 6, wherein the number of times of the returning is from 1 to 5.

8. The method for using the ceramic filter according to any one of claims 1 to 7, wherein the separation membrane (31) is a membrane by which alcohol is separable from an organic liquid medium containing the alcohol.

9. The method for using the ceramic filter according to any one of claims 1 to 8, wherein the separation membrane (31) is a hybrid silica membrane having an organic functional group.

10. A filter device comprising:
a ceramic filter (1) that includes a pillar-shaped porous body (9) having a circumferential surface (6), and having a plurality of through channels (4) extending through the porous body from a first end face (2) to a second end face (3) and formed in rows, and a separation membrane (31) disposed on each of inner wall surfaces of at least part of the plurality of through channels (4), wherein some of the plurality of through channels are water collecting cells (4b) whose open ends in the first end face and the second end face are plugged by plugging members (8), and further wherein water collecting slits (7) are disposed to open in the circumferential surface (6) of the porous body (9) so that the water collecting cells communicate with an external space; and
a casing (12) which receives the ceramic filter (1) and forms an introduction path (16a) to introduce a mixed fluid into the ceramic filter, an intermediate path (16b) to return and reintroduce, into the ceramic filter, the mixed fluid which is being treated, and a discharge path (16c) to discharge the treated fluid from the ceramic filter,
wherein the plurality of through channels (4) have at least one set of an outward path (5a) in which the mixed fluid flows from the first end face (2) to the second end face (3) and a return path (5b) in which the mixed fluid returns and flows from the second end face (3) to the first end face (2),
wherein water collecting cells (4b) are arranged to form at least one row in end faces of the porous body,
wherein through channels division means (15) is disposed along the row in which the water collecting cells (4b) are arranged in at least one of the end faces of the porous body in a state where the through channel division means (15) is in contact with the row, and
the outward path (5a) and the return path (5b) are divided by the through channel division means (15).

11. The filter device according to claim 10, further comprising decompressing port (14) disposed in a part of a portion of the casing (12) which covers the ceramic filter (1) for controlling an inner pressure of the casing to promote separation of a target permeable substance.

12. The filter device according to claim 10 or 11, comprising a plurality of heating means (13) for heating the mixed fluid before the mixed fluid flows into each of the outward path and the return path.

13. The filter device according to any one of claims 10 to 12,
wherein the plurality of through channels are divided into a plurality of zones including the outward path (5a) and the return path (5b), and
the plurality of zones are formed by the through channel division means (15) disposed in the first end face and the second end face.

14. The filter device according to any one of claims 10 to 13, wherein the through channel division means (15) is seal means (17) disposed in each of the first end face and the second end face for preventing the mixed fluid from penetrating beyond the through channel division means at least an inflow side end face (2).

15. The filter according to claim 14, wherein a width of the seal means is from 0.5 to 1.5 times as large as a width of the row in which the water collecting cells are arranged.

16. The filter device according to any one of claims 10 to 15, wherein the number of times of the returning is from 1 to 5.

17. The filter device according to any one of claims 10 to 16, wherein the separation membrane is a hybrid silica membrane having an organic functional group.

18. The filter device according to any one of claims 10 to 17, wherein a capacity of the intermediate path (16b) is from 5 to 50% of a through channel capacity.

19. The filter device according to any one of claims 10 to 18, wherein the discharge path is positioned on a side opposite to the introduction path via the ceramic filter.

## Patentansprüche

1. Verfahren zur Verwendung eines Keramikfilters (1), der zum Trennen einer gewünschten permeablen Substanz von einem gemischten Fluid verwendet wird und der einen säulenförmigen porösen Körper (9) mit einer Umfangsfläche (6) und mit einer Vielzahl von Durchgangskanälen (4), die sich durch den porösen Körper von einer ersten Stirnfläche (2) zu einer zweiten Stirnfläche (3) erstrecken und in Reihen gebildet sind, und eine Trennmembran (31) aufweist, die auf jeder der Innenwandflächen von mindestens einem Teil der Vielzahl von Durchgangskanälen (4) angeordnet ist, wobei einige der Vielzahl von Durchgangskanälen Wassersammelzellen (4b) sind, deren offene Enden in der ersten Stirnfläche und der zweiten Stirnfläche durch Stopfenelemente (8) verschlossen sind, wobei ferner Wassersammelschlitze (7) so angeordnet sind, dass sie in der Umfangsfläche (6) des porösen Körpers (9) öffnen, so dass die Wassersammelzellen (4b) mit einem Außenraum in Verbindung stehen, und wobei die Wassersammelzellen (4b) so angeordnet sind, dass sie mindestens eine Reihe in den Stirnflächen des porösen Körpers bilden, wobei das Verfahren zum Verwenden des Keramikfilters umfasst:
Anordnen von Durchgangskanalteilungsmitteln (15) entlang einer Reihe (8a), in der die Wassersammelzellen (4b) in mindestens einer der Stirnflächen des porösen Körpers in einem Zustand angeordnet sind, in dem das Durchgangskanalteilungsmittel (15) mit der Reihe in Kontakt steht, und Aufteilen der Vielzahl von Durchgangskanälen in eine Vielzahl von Zonen einschließlich eines Hinwegs (5a) und eines Rückwegs (5b) unter Verwendung der Durchgangskanalteilungsmittel (15), so dass die gemischte Flüssigkeit mindestens einmal einem Durchlaufprozess des Durchlaufens des Hinwegs (5a) unterworfen wird, bei dem die gemischte Flüssigkeit von der ersten Stirnseite (2) zur zweiten Stirnseite (3) des Keramikfilters strömt, zurückkehrt und dann den Rückweg (5b) durchläuft, bei dem die gemischte Flüssigkeit von der zweiten Stirnseite (3) zur ersten Stirnseite (2) strömt, und
Sammeln der gewünschten permeablen Substanz, nachdem die gewünschte permeable Substanz die Trennmembran (31) durchdrungen hat.

2. Verfahren zur Verwendung des Keramikfilters nach Anspruch 1, mit Absenken des Drucks im Inneren eines Gehäuses, in dem der Keramikfilter aufgenommen ist, unter Verwendung von Druckabsenkungsmitteln.

3. Verfahren zur Verwendung des Keramikfilters nach Anspruch 1 oder 2, mit Erwärmen der gemischten Flüssigkeit, bevor die gemischte Flüssigkeit in jeden der Hin- (5a) und Rückwege (5b) strömt.

4. Verfahren zur Verwendung des Keramikfilters nach einem der Ansprüche 1 bis 3, mit Anordnen von Dichtungsmitteln (17) als Durchgangskanalteilungsmittel (15), um das Eindringen der gemischten Flüssigkeit über die Durchgangskanalteilungsmittel hinaus zumindest auf einer einströmseitigen Stirnfläche (2) zu verhindern.

5. Verfahren zur Verwendung des Keramikfilters nach Anspruch 4, mit Anordnen der Dichtungsmittel als Durchgangskanalteilungsmittel in sowohl der ersten Stirnfläche als auch der zweiten Stirnfläche (3).

6. Verfahren zur Verwendung des Keramikfilters nach Anspruch 5, wobei eine Breite der Dichtungsmittel (17) 0,5 bis 1,5 mal so groß ist wie eine Breite der Reihe, in der die Wassersammelzellen angeordnet sind.

7. Verfahren zur Verwendung des Keramikfilters nach einem der Ansprüche 1 bis 6, wobei die Anzahl der Male der Rückführung von 1 bis 5 beträgt.

8. Verfahren zur Verwendung des Keramikfilters nach einem der Ansprüche 1 bis 7, worin die Trennmembran (31) eine Membran ist, durch die Alkohol von einem den Alkohol enthaltenden organischen flüssigen Medium abtrennbar ist.

9. Verfahren zur Verwendung des Keramikfilters nach einem der Ansprüche 1 bis 8, worin die Trennmembran (31) eine hybride Siliziumdioxidmembran mit einer organischen Funktionsgruppe ist.

10. Filtervorrichtung, mit:
einem Keramikfilter (1), der einen säulenförmigen porösen Körper (9) mit einer Umfangsfläche (6) und einer Vielzahl von Durchgangskanälen (4), die sich durch den porösen Körper von einer ersten Stirnfläche (2) zu einer zweiten Stirnfläche (3) erstrecken und in Reihen ausgebildet sind, und eine Trennmembran (31) aufweist, die auf jeder der Innenwandflächen von mindestens einem Teil der Vielzahl von Durchgangskanälen (4) angeordnet ist, wobei einige der Vielzahl von Durchgangskanälen Wassersammelzellen (4b) sind, deren offene Enden in der ersten Stirnfläche und der zweiten Stirnfläche durch Stopfenelemente (8) verschlossen sind, und wobei ferner Wassersammelschlitze (7) angeordnet sind, um sich in der Umfangsfläche (6) des porösen Körpers (9) zu öffnen, so dass die Wassersammelzellen mit einem Außenraum in Verbindung stehen; und
einem Gehäuse (12), das den Keramikfilter (1) aufnimmt und einen Einführungspfad (16a), um eine gemischte Flüssigkeit in den Keramikfilter einzubringen, einen Zwischenpfad (16b), um die zu behandelnde gemischte Flüssigkeit zurückzuführen und wieder in den Keramikfilter einzubringen, und einen Auslasspfad (16c) bildet, um die behandelte Flüssigkeit aus dem Keramikfilter abzuführen,
wobei die Vielzahl von Durchgangskanälen (4) mindestens einen Satz aus einem Hinweg (5a), in dem die gemischte Flüssigkeit von der ersten Stirnfläche (2) zu der zweiten Stirnfläche (3) strömt, und einem Rückweg (5b) aufweist, in dem die gemischte Flüssigkeit zurückkehrt und von der zweiten Stirnfläche (3) zu der ersten Stirnfläche (2) strömt,
wobei die Wassersammelzellen (4b) angeordnet sind, um mindestens eine Reihe in den Stirnflächen des porösen Körpers zu bilden.
wobei Durchgangskanalteilungsmittel (15) entlang der Reihe angeordnet sind, in der die Wassersammelzellen (4b) in mindestens einer der Stirnseiten des porösen Körpers in einem Zustand angeordnet sind, in dem die Durchgangskanalteilungsmittel (15) mit der Reihe in Kontakt stehen, und
der Hinweg (5a) und der Rückweg (5b) durch das Durchgangskanalteilungsmittel (15) geteilt sind.

11. Filtervorrichtung nach Anspruch 10, ferner mit einem Druckabsenkungsanschluss (14), der in einem Teil eines Abschnitts des Gehäuses (12) angeordnet ist, der den Keramikfilter (1) abdeckt, um einen Innendruck des Gehäuses zu steuern, um die Trennung einer gewünschten permeablen Substanz zu fördern.

12. Filtervorrichtung nach Anspruch 10 oder 11, mit einer Vielzahl von Heizmitteln (13) zum Erwärmen der gemischten Flüssigkeit, bevor die gemischte Flüssigkeit in jeden der Hin- und Rückwege strömt.

13. Filtervorrichtung nach einem der Ansprüche 10 bis 12,
wobei die Vielzahl der Durchgangskanäle in eine Vielzahl von Zonen unterteilt ist, die den Hinweg (5a) und den Rückweg (5b) beinhalten, und
die Vielzahl von Zonen durch die Durchgangskanalteilungsmittel (15) gebildet wird, die in der ersten Stirnfläche und der zweiten Stirnfläche angeordnet sind.

14. Filtervorrichtung nach einem der Ansprüche 10 bis 13, wobei das Durchgangskanalteilungsmittel (15) ein Dichtungsmittel (17) ist, das in sowohl der ersten Stirnfläche als auch der zweiten Stirnfläche angeordnet ist, um die gemischte Flüssigkeit mindestens an einer einströmseitigen Stirnfläche (2) daran zu hindern, über das Durchgangskanalteilungsmittel hinaus einzudringen.

15. Filter nach Anspruch 14, wobei eine Breite der Dichtungsmittel 0,5 bis 1,5 mal so groß ist wie eine Breite der Reihe, in der die Wassersammelzellen angeordnet sind.

16. Filtervorrichtung nach einem der Ansprüche 10 bis 15, wobei die Anzahl der Male der Rückführung von 1 bis 5 beträgt.

17. Filtervorrichtung nach einem der Ansprüche 10 bis 16, wobei die Trennmembran eine hybride Siliziumdioxidmembran mit einer organischen Funktionsgruppe ist.

18. Filtervorrichtung nach einem der Ansprüche 10 bis 17, wobei eine Kapazität des Zwischenpfades (16b) von 5 bis 50% einer Durchgangskanalkapazität beträgt.

19. Filtervorrichtung nach einem der Ansprüche 10 bis 18, wobei der Auslasspfad auf einer dem Einführungspfad über den Keramikfilter gegenüberliegenden Seite positioniert ist.

## Revendications

1. Procédé d'utilisation d'un filtre céramique (1) qui est utilisé pour séparer une substance perméable cible d'un fluide mélangé et qui comprend un corps poreux en forme de colonne (9) ayant une surface circonférentielle (6), et ayant une pluralité de canaux traversants (4) s'étendant à travers le corps poreux d'une première face d'extrémité (2) à une deuxième face d'extrémité (3) et formés en rangées, et une membrane de séparation (31) disposée sur chacune des surfaces de paroi intérieure d'au moins une partie de la pluralité de canaux traversants (4), dans lequel certains de la pluralité de canaux traversants sont des cellules de collecte d'eau (4b) dont les extrémités ouvertes dans la première face d'extrémité et la deuxième face d'extrémité sont obturées par des éléments d'obturation (8), dans lequel en outre des fentes de collecte d'eau (7) sont disposées pour s'ouvrir dans la surface circonférentielle (6) du corps poreux (9) de sorte que les cellules de collecte d'eau (4b) communiquent avec un espace externe, et dans lequel les cellules de collecte d'eau (4b) sont agencées pour former au moins une rangée dans des faces d'extrémité du corps poreux, le procédé d'utilisation du filtre céramique comprenant :
la disposition d'un moyen de division de canal traversant (15) le long d'une rangée (8a) dans laquelle les cellules de collecte d'eau (4b) sont agencées dans au moins une des faces d'extrémité du corps poreux dans un état où le moyen de division de canal traversant (15) est en contact avec la rangée, et la division de la pluralité de canaux traversants en une pluralité de zones comprenant un trajet vers l'extérieur (5a) et un trajet de retour (5b) par l'utilisation du moyen de division de canal traversant (15) de sorte que le fluide mélangé est soumis, au moins une fois, à un processus de passage consistant en un passage à travers le trajet vers l'extérieur (5a) dans lequel le fluide mélangé s'écoule de la première face d'extrémité (2) à la deuxième face d'extrémité (3) du filtre céramique, un retour et ensuite un passage à travers le trajet de retour (5b) dans lequel le fluide mélangé s'écoule de la deuxième face d'extrémité (3) à la première face d'extrémité (2), et
la collecte de la substance perméable cible après que la substance perméable cible traverse la membrane de séparation (31).

2. Procédé d'utilisation du filtre céramique selon la revendication 1, comprenant la décompression d'un intérieur d'un boîtier dans lequel le filtre céramique est reçu par l'utilisation de moyens de dépression.

3. Procédé d'utilisation du filtre céramique selon la revendication 1 ou 2, comprenant le chauffage du fluide mélangé avant que le fluide mélangé ne s'écoule dans chacun du trajet vers l'extérieur (5a) et du trajet de retour (5b).

4. Procédé d'utilisation du filtre céramique selon l'une quelconque des revendications 1 à 3, comprenant la disposition, en tant que moyen de division de canal traversant (15), de moyen d'étanchéité (17) pour empêcher le fluide mélangé de pénétrer au-delà du moyen de division de canal traversant au moins une face d'extrémité côté entrée (2).

5. Procédé d'utilisation du filtre céramique selon la revendication 4, comprenant la disposition, en tant que moyen de division de canal traversant, du moyen d'étanchéité dans chacune de la première face d'extrémité et de la deuxième face d'extrémité (3).

6. Procédé d'utilisation du filtre céramique selon la revendication 5, dans lequel une largeur du moyen d'étanchéité (17) est de 0,5 à 1,5 fois une largeur de la rangée dans laquelle les cellules de collecte d'eau sont agencées.

7. Procédé d'utilisation du filtre céramique selon l'une quelconque des revendications 1 à 6, dans lequel le nombre d'occurrences du retour est de 1 à 5.

8. Procédé d'utilisation du filtre céramique selon l'une quelconque des revendications 1 à 7, dans lequel la membrane de séparation (31) est une membrane par laquelle l'alcool est séparable d'un milieu liquide organique contenant l'alcool.

9. Procédé d'utilisation du filtre céramique selon l'une quelconque des revendications 1 à 8, dans lequel la membrane de séparation (31) est une membrane en silice hybride ayant un groupe fonctionnel organique.

10. Dispositif filtre comprenant :
un filtre céramique (1) qui comprend un corps poreux en forme de colonne (9) ayant une surface circonférentielle (6), et ayant une pluralité de canaux traversants (4) s'étendant à travers le corps poreux d'une première face d'extrémité (2) à une deuxième face d'extrémité (3) et formés en rangées, et une membrane de séparation (31) disposée sur chacune des surfaces de paroi intérieure d'au moins une partie de la pluralité de canaux traversants (4), dans lequel certains de la pluralité de canaux traversants sont des cellules de collecte d'eau (4b) dont les extrémités ouvertes dans la première face d'extrémité et la deuxième face d'extrémité sont obturées par des éléments d'obturation (8), et dans lequel en outre des fentes de collecte d'eau (7) sont disposées pour s'ouvrir dans la surface circonférentielle (6) du corps poreux (9) de sorte que les cellules de collecte d'eau communiquent avec un espace externe ; et
un boîtier (12) qui reçoit le filtre céramique (1) et forme un trajet d'introduction (16a) pour introduire un fluide mélangé dans le filtre céramique, un trajet intermédiaire (16b) pour retourner et réintroduire, dans le filtre céramique, le fluide mélangé qui est traité, et un trajet d'évacuation (16c) pour évacuer le fluide traité du filtre céramique,
dans lequel la pluralité de canaux traversants (4) ont au moins un ensemble d'un trajet vers l'extérieur (5a) dans lequel le fluide mélangé s'écoule de la première face d'extrémité (2) à la deuxième face d'extrémité (3) et un trajet de retour (5b) dans lequel le fluide mélangé retourne et s'écoule de la deuxième face d'extrémité (3) à la première face d'extrémité (2),
dans lequel des cellules de collecte d'eau (4b) sont agencées pour former au moins une rangée dans des faces d'extrémité du corps poreux,
dans lequel un moyen de division de canal traversant (15) est disposé le long de la rangée dans laquelle les cellules de collecte d'eau (4b) sont agencées dans au moins une des faces d'extrémité du corps poreux dans un état où le moyen de division de canal traversant (15) est en contact avec la rangée, et
le trajet vers l'extérieur (5a) et le trajet de retour (5b) sont divisés par le moyen de division de canal traversant (15).

11. Dispositif filtre selon la revendication 10, comprenant en outre un orifice de décompression (14) disposé dans une partie d'une portion du boîtier (12) qui couvre le filtre céramique (1) pour controller une pression intérieure du boîtier pour favoriser la séparation d'une substance perméable fluide.

12. Dispositif filtre selon la revendication 10 ou 11, comprenant une pluralité de moyens de chauffage (13) pour chauffer le fluide mélangé avant que le fluide mélangé ne s'écoule dans chacun du trajet vers l'extérieur et du trajet de retour.

13. Dispositif filtre selon l'une quelconque des revendications 10 à 12,
dans lequel la pluralité de canaux traversants sont divisés en une pluralité de zones comprenant le trajet vers l'extérieur (5a) et le trajet de retour (5b), et
la pluralité de zones sont formées par le moyen de division de canal traversant (15) disposé dans la première face d'extrémité et la deuxième face d'extrémité.

14. Dispositif filtre selon l'une quelconque des revendications 10 à 13, dans lequel le moyen de division de canal traversant (15) est un moyen d'étanchéité (17) disposé dans chacune de la première face d'extrémité et de la deuxième face d'extrémité pour empêcher le fluide mélangé de pénétrer au-delà du moyen de division de canal traversant au moins une face d'extrémité côté entrée (2).

15. Filtre selon la revendication 14, dans lequel une largeur du moyen d'étanchéité est de 0,5 à 1,5 fois une largeur de la rangée dans laquelle les cellules de collecte d'eau sont agencées.

16. Dispositif filtre selon l'une quelconque des revendications 10 à 15, dans lequel le nombre d'occurrences du retour est de 1 à 5.

17. Dispositif filtre selon l'une quelconque des revendications 10 à 16, dans lequel la membrane de séparation est une membrane en silice hybride ayant un groupe fonctionnel organique.

18. Dispositif filtre selon l'une quelconque des revendications 10 à 17, dans lequel une capacité du trajet intermédiaire (16b) est de 5 à 50 % d'une capacité de canal traversant.

19. Dispositif filtre selon l'une quelconque des revendications 10 à 18, dans lequel le trajet d'évacuation est positionné sur un côté opposé au trajet d'introduction via le filtre céramique.
